# DEMANDE DE BREVET EUROPEEN

(11) **EP 2 433 907 A1**
(43) Date de publication de la demande: **28.03.2012**
(21) Numéro de dépôt: 11360043.1
(22) Date de dépôt: 26.09.2011
(51) Int. Cl.: C02F 1/00, B01D 25/00, B01D 35/26

(54) **Dispositif d'assainissement de l'eau contenue dans un bassin**

(30) Priorité: 27.09.2010 FR 1057759
(71) Demandeur: Dreyer, Gilbert, 68720 Illfurth (FR)
(72) Inventeur: Dreyer, Gilbert, 68720 Illfurth (FR); Dreyer, Grégory, 68480 Durmenach (FR)
(74) Mandataire: Nithardt, Roland

(57) **Abrégé**

La présente invention concerne un dispositif d'assainissement (2) de l'eau contenue dans un bassin, ledit dispositif comportant au moins un bac (3), fermé par un couvercle (4), pourvu d'un orifice d'entrée de l'eau (8) et d'un orifice de sortie de l'eau (9), le volume interne dudit bac (3) délimitant au moins un logement (5) agencé pour accueillir des moyens de filtration de l'eau et/ou des moyens de traitement de l'eau, ledit bac (3) comportant également des moyens de récupération des particules solides issues du traitement et/ou de la filtration de l'eau. Il se caractérise en ce que ledit logement (5), lesdits moyens de filtration de l'eau et lesdits moyens de traitement de l'eau sont agencés de manière telle que ledit bac (3) puisse être équipé desdits moyens de filtration de l'eau et/ou desdits moyens de traitement de l'eau selon des dispositions interchangeables et librement choisies par l'utilisateur.

## Description

### Domaine technique :

La présente invention concerne un dispositif d'assainissement de l'eau contenue dans un bassin, ledit dispositif comportant au moins un bac, fermé par un couvercle, pourvu d'un orifice d'entrée et d'un orifice de sortie de l'eau, le volume interne dudit bac délimitant au moins un logement agencé pour accueillir des moyens de filtration de l'eau et/ou des moyens de traitement de l'eau, ledit bac comportant également des moyens de récupération des particules solides issues du traitement et/ou de la filtration de l'eau.

L'invention concerne également une cartouche agencée pour être disposée dans ledit logement que comporte le bac d'un tel dispositif d'assainissement de l'eau d'un bassin.

### Technique antérieure :

De nombreux systèmes existent à l'heure actuelle pour assainir l'eau d'un bassin d'agrément ou de baignade. Ils consistent classiquement à effectuer une filtration mécanique et/ou biologique et/ou chimique de l'eau, complétée par un traitement aux rayonnements ultraviolets pour clarifier l'eau et détruire les algues en suspension et les éventuels microorganismes pathogènes. Pour réaliser ces différents traitements, l'eau est dirigée au moyen d'une pompe à travers différents équipements de filtration ou de traitement de l'eau qui doivent impérativement être choisis et dimensionnés selon les spécificités propres à chaque bassin pour conduire à un résultat optimal.

Ainsi, un bassin d'agrément contenant une faune et une flore importante nécessite une installation d'assainissement différente de celle d'un bassin de baignade généralement moins peuplé, voire dépourvu de toute faune.

A l'heure actuelle, des matériaux tels que notamment des zéolithes, des mousses, des pierres de lave, des éponges, des tapis japonais ou des biobilles sont couramment utilisés en tant que filtres chimiques ou biologiques. Ces matériaux constituent des « masses filtrantes » classiquement contenues à l'intérieur de bacs à travers lesquels l'eau circule depuis un orifice d'entrée vers un orifice de sortie, et comportant un ou plusieurs logements pour accueillir lesdites masses filtrantes. Une filtration mécanique peut en outre être réalisée à l'aide de brosses ou de grilles, placées dans le bac avant ou après les filtres chimiques et/ou biologiques, sur le circuit effectué par l'eau. De même, les lampes à rayonnements ultraviolets sont généralement confinées à l'intérieur de bacs traversés par l'eau. Certains bacs comportent en outre des moyens d'évacuation des boues issues du traitement de l'eau, tels que des vannes de vidange.

Une solution couramment mise en oeuvre pour traiter l'eau d'un bassin, consiste à raccorder entre eux différents bacs comportant chacun un unique logement, accueillant chacun des masses filtrantes de nature identique ou variable, ou une lampe à rayonnements ultraviolets. De tels bacs sont disposés de manière individuelle, selon un arrangement choisi par l'utilisateur, sur le circuit effectué par l'eau. Cette manière de procéder a pour avantage de multiplier les possibilités de combinaisons entre les différents équipements de filtration ou de traitement, dont la nature et la disposition peuvent être choisies et modifiées au cas par cas selon la qualité de l'eau à traiter. Néanmoins, cette solution est de mise en oeuvre laborieuse et suppose de nombreuses manipulations, du fait d'une multiplication des raccordements à effectuer entre les différents bacs.

Afin de pallier cet inconvénient, des bacs comportant plusieurs logements pouvant chacun accueillir des masses filtrantes de nature identique ou différente, et agissant chacune de manière spécifique sur l'eau du bassin, ont été proposés.

On connaît par exemple de la publication EP 0 416 351 un bac formé de différents logements en forme de coquille pouvant être reliés les uns aux autres et contenant chacun un élément de filtre formé d'éléments d'extrémités enserrant plusieurs éléments intermédiaires de forme identique et agencés pour accueillir chacun au moins une plaque filtrante.

En outre, il existe à l'heure actuelle également des bacs comportant encore au moins un logement spécifiquement dédié à la réception d'une lampe à rayonnements ultraviolets. L'exemple décrit dans la publication EP 1 758 668 comporte ainsi un bac fermé par un couvercle principal délimitant un logement agencé pour accueillir des masses filtrantes. Un couvercle intermédiaire forme avec le couvercle principal un autre logement dans lequel est disposée une lampe à rayonnements ultraviolets.

Bien que définissant une amélioration des systèmes consistant à combiner plusieurs équipements individuels, les bacs comportant plusieurs logements ne donnent pas entière satisfaction. En effet, leur mode de construction impose une position prédéterminée des lampes à rayonnements ultraviolets par rapport aux masses filtrantes sur le circuit de l'eau. Or, la qualité de celle-ci étant variable au cours du temps, il est nécessaire de pouvoir ajuster périodiquement la nature des traitements requis. En particulier, il peut s'avérer particulièrement utile de pouvoir varier la position des lampes à rayonnements ultraviolets par rapport aux masses filtrantes, pour effectuer une stérilisation de l'eau selon le cas avant, pendant ou après sa filtration.

### Exposé de l'invention:

La présente invention a pour objet de proposer un dispositif d'assainissement de l'eau d'un bassin, réunissant dans un même volume l'ensemble des équipements nécessaires au traitement de l'eau, et pouvant être disposés les uns par rapport aux autres selon des dispositions modulaires, évolutives au fil du temps, et librement choisies par l'utilisateur. Un autre objet de l'invention est de proposer un dispositif d'assainissement de l'eau d'un bassin plus facile d'entretien que les dispositifs précédemment évoqués, sans gaspillage d'eau.

Dans ce but, l'invention concerne un dispositif d'assainissement de l'eau d'un bassin du genre indiqué en préambule, caractérisé en ce que ledit logement, lesdits moyens de filtration de l'eau et lesdits moyens de traitement de l'eau sont agencés de manière telle que ledit bac puisse être équipé desdits moyens de filtration de l'eau et/ou desdits moyens de traitement de l'eau selon des dispositions interchangeables et librement choisies par l'utilisateur.

A cet effet, ledit logement comporte une structure symétrique par rapport à un plan vertical, tandis que lesdits moyens de filtration de l'eau et lesdits moyens de traitement de l'eau sont respectivement contenus dans des compartiments spécifiques agencés pour être disposés dans ledit logement, lesdits compartiments définissant respectivement une cartouche de filtration de l'eau et une cartouche de traitement de l'eau interchangeables et remplaçables, ou deux cartouches de filtration de l'eau interchangeables et remplaçables ou deux cartouches de traitement de l'eau interchangeables et remplaçables.

Selon une variante de réalisation préférentielle, ladite cartouche de filtration de l'eau comporte avantageusement un panier, de forme sensiblement parallélépipédique, fermé par un capot, et dont au moins les parois et le fond sont ajourés, ledit panier étant pourvu de moyens de sélection du sens de circulation de l'eau à travers lesdits moyens de filtration contenus dans ledit panier.

De tels moyens de sélection du sens de circulation de l'eau peuvent comporter au moins deux réglettes pourvues d'une rangée d'ouvertures, chaque réglette étant montée coulissante sur une face latérale du capot, pour pouvoir être déplacée entre une première position dans laquelle ladite rangée d'ouvertures coïncide avec une rangée d'orifices répartis sur ladite face latérale dudit capot, pour permettre le passage de l'eau à travers lesdits orifices, et une seconde position dans laquelle ladite rangée d'ouvertures est décalée par rapport à ladite rangée d'orifices pour interdire le passage de l'eau à travers lesdits orifices.

La cartouche de filtration de l'eau comporte par ailleurs également des moyens de nettoyage des moyens de filtration de l'eau, pouvant par exemple consister en un tube perforé s'étendant à l'intérieur dudit panier et pourvu d'un raccord agencé pour être raccordé à une arrivée d'eau propre. Le tube perforé comporte de préférence une section de taille variable choisie en fonction du volume des moyens de filtration de l'eau à nettoyer.

Selon une autre variante de réalisation, la cartouche de filtration de l'eau comporte des moyens d'aération desdits moyens de filtration de l'eau pouvant comporter un tuyau s'étendant à l'intérieur dudit panier et pourvu d'un raccord agencé pour être raccordé à une arrivée d'air extérieur.

Par ailleurs, la cartouche de traitement de l'eau dont est pourvu le dispositif d'assainissement selon l'invention comporte de préférence un caisson, de forme et de taille sensiblement identiques à celles de ladite cartouche de filtration de l'eau, et à l'intérieur duquel s'étend au moins une lampe à rayonnements ultraviolets, ledit caisson comportant au moins un fond ajouré pour l'entrée de l'eau et une ouverture pour la sortie de l'eau située à proximité de l'extrémité supérieure d'une de ses faces latérales. En outre, ledit caisson comporte avantageusement un déflecteur situé à proximité du fond ajouré, dans le prolongement d'une de ses faces latérales, pour forcer le flux d'eau traversant ledit bac en direction dudit fond ajouré.

Une caractéristique additionnelle du présent dispositif d'assainissement est encore définie par le fait que le fond dudit bac est incliné par rapport à un plan horizontal et comporte une cuvette de décantation des particules solides en communication avec ledit logement.

Conformément à une variante de réalisation préférentielle, ledit logement et ladite cuvette de décantation sont séparés par une paroi agencée pour autoriser le passage de l'eau dudit logement vers ladite cuvette de décantation et interdire le passage de l'eau de ladite cuvette de décantation vers ledit logement. Ladite paroi peut en outre comporter un moyen de blocage permettant de la maintenir dans une position dans laquelle son extrémité inférieure s'arrête au-dessus du fond du bac à une distance telle qu'un passage est ménagé pour l'eau arrivant dudit logement.

Une telle cuvette de décantation comporte de préférence un réceptacle amovible permettant l'évacuation des particules solides sans perte d'eau dans le bassin.

La présente invention prévoit par ailleurs d'équiper le dispositif d'assainissement de l'eau d'un bassin de moyens d'assemblage d'une pluralité de bacs entre eux.

Conformément à une variante de réalisation, les moyens d'assemblage sont agencés pour assembler entre eux d'une part les pieds de deux bacs adjacents et d'autre part l'orifice d'entrée de l'eau d'un bac avec l'orifice de sortie de l'eau du bac adjacent.

L'invention concerne par ailleurs une cartouche agencée pour être disposée dans le logement d'un bac du dispositif d'assainissement tel que décrit précédemment, caractérisée en ce qu'elle comporte au moins un compartiment agencé pour contenir lesdits moyens de filtration de l'eau ou lesdits moyens de traitement de l'eau.

Le compartiment dont est pourvue la cartouche de filtration de l'eau comporte de préférence un panier, de forme sensiblement parallélépipédique, fermé par un capot, et dont au moins les parois et le fond sont ajourés, ledit panier étant pourvu de moyens de sélection du sens de circulation de l'eau à travers lesdits moyens de filtration contenus dans ledit panier.

Selon une variante de réalisation préférentielle, lesdits moyens de sélection du sens de circulation de l'eau comportent au moins deux réglettes pourvues d'une rangée d'ouvertures, chaque réglette étant montée coulissante sur une face latérale du capot, pour pouvoir être déplacée entre une première position dans laquelle ladite rangée d'ouvertures coïncide avec une rangée d'orifices répartis sur ladite face latérale dudit capot, pour permettre le passage de l'eau à travers lesdits orifices, et une seconde position dans laquelle ladite rangée d'ouvertures est décalée par rapport à ladite rangée d'orifices pour interdire le passage de l'eau à travers lesdits orifices.

Par ailleurs, la cartouche de filtration de l'eau selon l'invention se caractérise également en ce qu'elle comporte des moyens de nettoyage des moyens de filtration de l'eau, tel qu'un tube perforé s'étendant à l'intérieur dudit panier et pourvu d'un raccord agencé pour être raccordé à une arrivée d'eau propre.

D'autre part, le compartiment dont est pourvue la cartouche de traitement de l'eau comporte de préférence un panier à l'intérieur duquel s'étend au moins une lampe à rayonnements ultraviolets, ledit panier comportant au moins un fond ajouré pour l'entrée de l'eau et une ouverture pour la sortie de l'eau située à proximité de l'extrémité supérieure d'une de ses faces latérales. Le caisson comporte avantageusement un déflecteur situé à proximité du fond ajouré dans le prolongement d'une de ses faces latérales.

### Description sommaire des dessins :

La présente invention et ses avantages apparaîtront mieux dans la description suivante de deux modes de réalisation donnés à titre d'exemples non limitatifs, en référence aux dessins annexés, dans lesquels:
- la figure 1 représente une vue en perspective d'un dispositif d'assainissement selon l'invention comportant un unique bac,
- la figure 2 est une vue en perspective et en coupe partielle montrant une partie du volume interne du bac du dispositif d'assainissement de la figure 1,
- les figures 3A et 3B sont des vues en coupe respectivement selon le plan de coupe AA et selon le plan de coupe BB du bac du dispositif d'assainissement de la figure 1,
- la figure 4 représente une vue en perspective d'un dispositif d'assainissement selon l'invention comportant un assemblage de quatre bacs,
- les figures 5A et 5B sont des vues en perspective d'une cartouche de filtration de l'eau agencée pour être disposée dans le logement que comporte le bac du dispositif d'assainissement selon l'invention, montrant respectivement le capot et le fond de ladite cartouche de filtration,
- la figure 6A est une vue de la face arrière de la cartouche de filtration de l'eau de la figure 5A,
- la figure 6B est une vue en coupe selon le plan de coupe AA de la cartouche de filtration de l'eau de la figure 6A,
- les figures 7A et 7B sont des vues en perspective d'une cartouche de traitement de l'eau agencée pour être disposée dans le logement que comporte le bac du dispositif d'assainissement selon l'invention, montrant respectivement la face supérieure et le fond de ladite cartouche de traitement de l'eau,
- la figure 8A est une vue de la face arrière de la cartouche de traitement de l'eau de la figure 7A, et
- la figure 8B est une vue en coupe selon le plan de coupe AA de la cartouche de traitement de l'eau de la figure 8A.

### Illustrations de l'invention et meilleures manières de la réaliser :

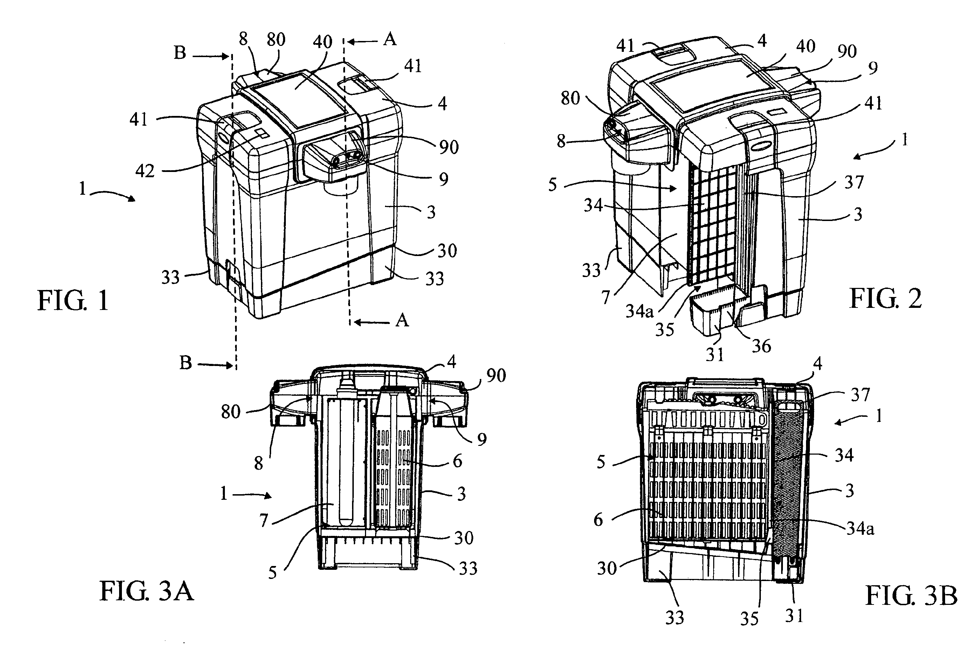

Dans l'exemple représenté aux figures 1, 2, 3A, 3B, le dispositif d'assainissement 1 selon l'invention comporte un bac 3 fermé par un couvercle 4, équipé de pieds 33 pouvant reposer sur un plan horizontal, et pourvu de manière classique d'un orifice d'entrée 8 et d'un orifice de sortie 9 de l'eau d'un bassin, respectivement raccordés au moyen de raccords 80, 90 à un circuit de circulation de l'eau du bassin comportant au moins une pompe (non représentée). Les raccords 80, 90 sont de préférence polyvalents et peuvent être formés de pièces identiques prédécoupées de manière à permettre leur raccordement respectivement sur l'orifice d'entrée 8 et sur l'orifice de sortie 9, l'orifice d'entrée 8 pouvant être plus étroit que l'orifice de sortie 9. Le couvercle 4 est assemblé au bac 3, par exemple par clippage, et est muni de poignées 41. La manipulation du bac 3 vide est ainsi facilitée. Le couvercle 4 peut également comporter une sonde 42, présentant le cas échéant un cadran numérique, et permettant la mesure et l'affichage de la température, du pH, ou d'autres données relatives à la qualité de l'eau circulant dans le bac 3. Le volume interne dudit bac 3 délimite un logement 5 accueillant une cartouche de filtration 6 et une cartouche de traitement 7 agencées pour être traversées par l'eau circulant à l'intérieur du volume défini par le bac 3, entre l'orifice d'entrée 8 et l'orifice de sortie 9.

Conformément à l'invention, le logement 5 comporte une structure symétrique par rapport à un plan vertical permettant d'interchanger les cartouches de filtration 6 et de traitement 7, lesquelles présentent avantageusement des formes sensiblement identiques. Lesdites cartouches 6, 7 peuvent par conséquent être disposées l'une par rapport à l'autre sur le trajet de l'eau, de manière librement choisie par l'utilisateur et évolutive au fil du temps, ce qui permet d'adapter la structure du dispositif d'assainissement 1 selon l'invention à la qualité de l'eau du bassin et d'améliorer son efficacité. Ainsi, il serait par exemple possible d'inverser les cartouches de filtration 6 et de traitement 7 pour transformer le dispositif d'assainissement 1 dans lequel, tel que visible à la figure 3A, la cartouche de traitement 7 est placée en premier sur le trajet de l'eau en un dispositif d'assainissement 1 dans lequel la cartouche de traitement 7 est placée en dernier sur le trajet de l'eau. Il serait également possible de remplacer l'une des deux cartouches de filtration 6 et de traitement 7 par une autre cartouche de nature différente.

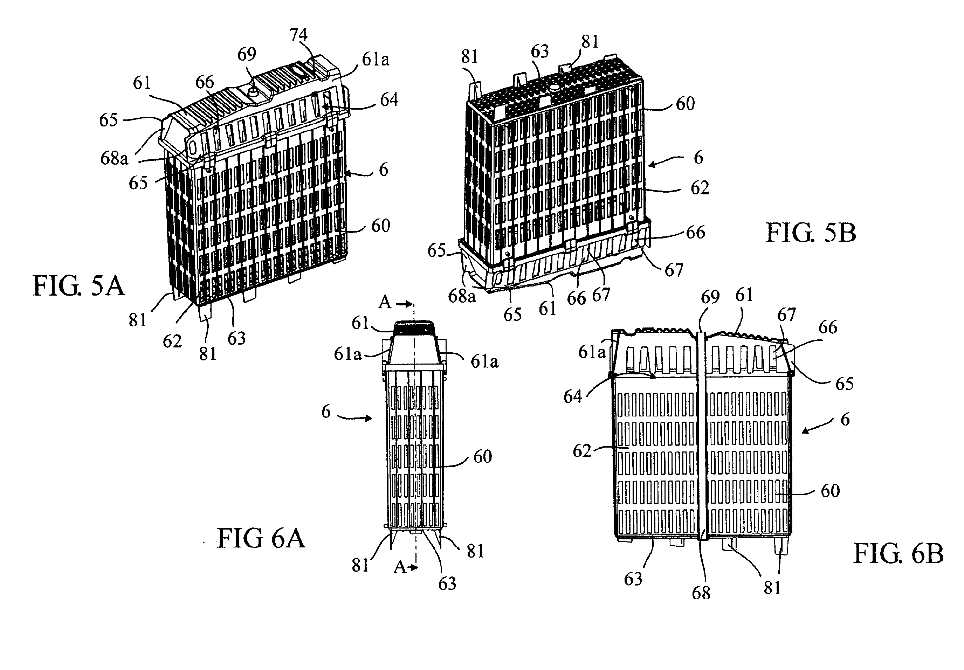

Dans la forme de réalisation représentée aux figures 5A, 5B, 6A, 6B, la cartouche de filtration 6 de l'eau se présente sous la forme d'un panier 60, par exemple en acier inoxydable ou en plastique, de forme sensiblement parallélépipédique, dont les parois 62 et le fond 63 sont ajourés et permettent le passage de l'eau. Des masses filtrantes permettant de réaliser une filtration chimique et/ou biologique de type classique, tels que des zéolithes, des mousses, des pierres de lave, des éponges, ou autres, peuvent être introduites, depuis une ouverture supérieure 64, à l'intérieur du panier 60.Un capot 61 chevauchant l'ouverture supérieure 64 du panier 60 et assemblé, par exemple au moyen de clips prévus sur la périphérie du panier 60, ou tout autre moyen équivalent, permet de fermer ledit panier 60 une fois les masses filtrantes introduites.

Le panier 60 est par ailleurs pourvu de deux réglettes 65, montées coulissantes sur chacune des faces latérales 61 a du capot 61 et comportant chacune une rangée d'ouvertures 66. Lesdites réglettes 65 peuvent être déplacées manuellement, au moyen d'une poignée 68a, le long des faces latérales 61a du capot 61 entre une première position et une deuxième position. Dans la première position, la rangée d'ouvertures 66 d'une réglette 65 coïncide avec une rangée d'orifices 67 répartis sur la face latérale 61a correspondante du capot 61, à l'arrière de la réglette 65, de manière à permettre le passage de l'eau à travers lesdits orifices 67. Dans la seconde position, ladite rangée d'ouvertures 66 est décalée par rapport à ladite rangée d'orifices 67 pour interdire le passage de l'eau à travers lesdits orifices 67. Il est ainsi possible de prédéfinir le sens de circulation de l'eau à travers le panier 60, en réglant les deux réglettes 65 de manière telle que l'une d'entre elles autorise le passage de l'eau tandis que l'autre interdit simultanément le passage de l'eau, forçant ainsi le trajet de l'eau à travers la masse filtrante, le fond et les parois latérales.

La cartouche de filtration 6 comporte en outre un tube perforé 68, de section cylindrique, plate ou autre, s'étendant par exemple verticalement à l'intérieur du panier 60 et dont l'extrémité supérieure est munie d'un raccord 69 agencé pour être raccordé, après ouverture du couvercle 4, à une arrivée d'eau propre. Cette caractéristique permet de procéder si nécessaire à un lavage à l'eau des masses filtrantes placées à l'intérieur du panier 60, sans retirer celui-ci du bac 3. Un hublot 40 dont est pourvu le couvercle 4 du bac 3 (cf. fig. 1 et 2) permet en outre de vérifier périodiquement le degré de salissure desdites masses filtrantes sans ouvrir ledit couvercle 4. La section du tube perforé 68 est avantageusement disponible en différentes tailles de sorte à permettre son adaptation en fonction du volume du panier 60 et des masses filtrantes qui y sont contenues. En outre, le hublot 40 peut être équipé d'un cache escamotable 40' permettant le cas échéant de l'obturer afin d'éviter le développement de mousses ou d'algues pouvant survenir en cas d'exposition du bac 3 à un fort ensoleillement.

Dans la variante de réalisation illustrée, la cartouche de filtration 6 comporte en outre un raccord 74 agencé pour être connecté d'une part à une arrivée d'air extérieur, telle que notamment une pompe à air ou un surpresseur, et d'autre part à un tuyau (non représenté) s'étendant à l'intérieur de ladite cartouche de filtration 6. Cette dernière est ainsi avantageusement pourvue de moyens d'aération des masses filtrantes qui y sont contenues, permettant d'améliorer la filtration de l'eau grâce à un apport d'oxygène aux bactéries que comportent lesdites masses filtrantes.

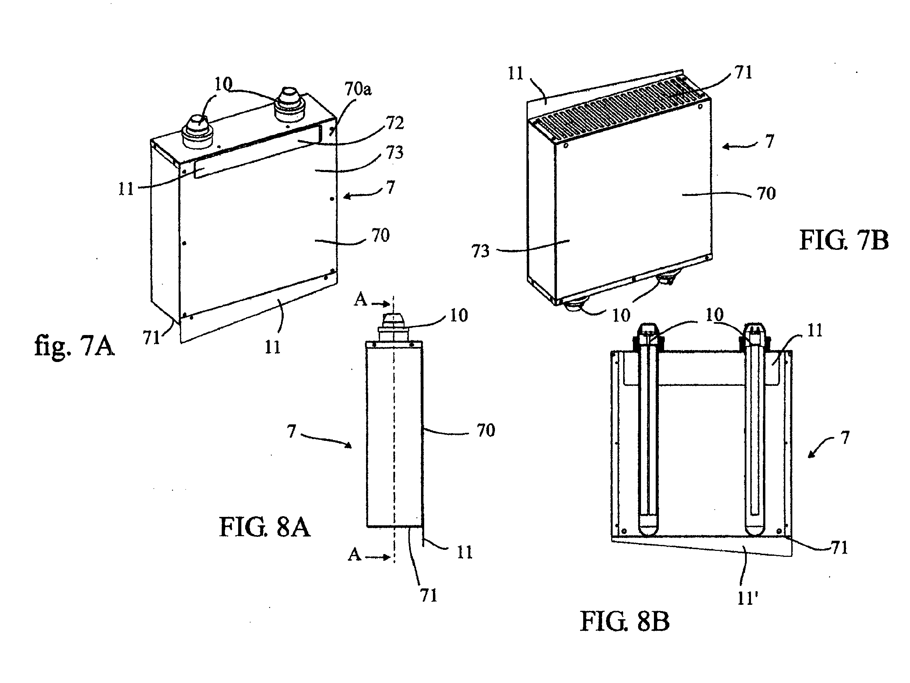

Une cartouche de traitement de l'eau 7 conforme à l'invention est représentée sur les figures 7A, 7B, 8A, 8B. Elle comporte un caisson 70, par exemple en acier inoxydable ou en plastique, de forme et de taille sensiblement identiques au panier 60 de ladite cartouche de filtration de l'eau 6 précédemment décrite. Ledit caisson 70 comporte un fond ajouré 71 pour l'entrée de l'eau et une ouverture 72 pour la sortie de l'eau située à proximité de l'extrémité supérieure 70a d'une de ses faces latérales 73. Tel que visible sur la figure 8B, deux lampes 10 à rayonnements ultraviolets s'étendent verticalement à l'intérieur du caisson 70. Celui-ci est avantageusement pourvu, à proximité de l'ouverture 72, d'un cache de protection 11 permettant de préserver les yeux d'un utilisateur des effets desdits rayonnements émis par les lampes 10 à rayonnements ultraviolets. Un déflecteur 11' situé à proximité du fond ajouré 71 dans le prolongement d'une des faces latérales 73 du caisson 70, empêche l'eau de passer en dessous du caisson 70 et la force en direction du fond ajouré 71 pour entrer à l'intérieur du volume interne du caisson 70 comportant les lampes 10 à rayonnements ultraviolets.

Selon une autre caractéristique de l'invention, visible notamment à la figure 3B, le fond 30 du bac 3 est incliné par rapport à un plan horizontal et se prolonge au niveau de sa zone la plus basse d'une cuvette de décantation 31 permettant de recueillir les particules solides issues des procédés de filtration et de traitement UV de l'eau. Le logement 5 et la cuvette de décantation 31 sont séparés par une paroi 34 (cf. fig. 2 et 3B) dont l'extrémité inférieure 34a s'arrête au-dessus du fond 30 du bac 3 à une distance telle qu'un passage 35 est ménagé pour l'eau arrivant dudit logement 5 et transportant les particules solides vers ladite cuvette de décantation 31. A cet effet, la paroi 34 peut avantageusement comporter des moyens de blocage (non illustrés) permettant de la maintenir dans une position haute, dans laquelle ledit passage 35 est ménagé. Ces moyens de blocage peuvent notamment être définis par deux rehausseurs reliés aux angles de l'extrémité supérieure de ladite paroi 34 agencés pour pivoter entre une position dans laquelle ladite paroi 34 est bloquée dans ladite position haute et une position dans laquelle la paroi 34 est débloquée et peut être retirée si nécessaire. Tout autre moyen de blocage équivalent mais de forme différente peut également convenir.

Selon une caractéristique additionnelle de l'invention, la cuvette de décantation 31 se présente sous la forme d'un réceptacle amovible 36 muni d'une poignée 37 permettant son extraction du bac 3 après avoir ouvert le couvercle 4 pour évacuer les particules solides, par exemple vers une zone de compostage, sans perte d'eau, et par conséquent sans impacter sur le niveau de remplissage du bassin. La poignée 37 prolonge l'extrémité supérieure d'une paroi pleine 37' s'étendant entre les deux cartouches 6, 7 pour empêcher le passage de l'eau entre les deux cartouches 6, 7.

Tel que visible sur les figures 5A, 5B, 6A et 6B, le panier 60 de la cartouche de filtration 6 est équipé de paires de pieds 81 de tailles décroissantes permettant d'adapter la forme générale du panier 60 à l'inclinaison du fond 30 du bac 3 afin d'assurer sa stabilité dans le logement 5. De même, en référence aux figures 7A, 7B, 8A et 8B, le caisson 70 de la cartouche de traitement 7 comporte à proximité de son fond 71 un déflecteur 11' de forme complémentaire à celle du fond 30 du bac 3, de sorte que le caisson 70 y repose de manière stable. Ce déflecteur 11' est avantageusement prévu amovible et réversible. Il peut par conséquent être démonté et déplacé d'une face latérale 73 du caisson 70 vers l'autre face latérale 73 du caisson 70.

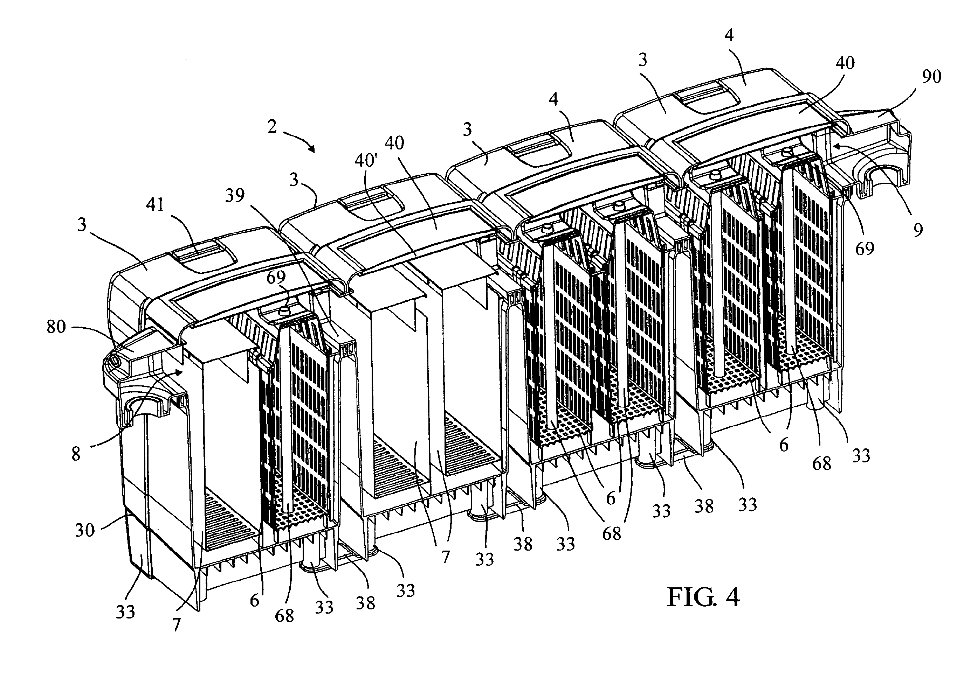

La figure 4 correspond à une variante de réalisation dans laquelle un dispositif d'assainissement 2 selon l'invention résulte d'un assemblage entre quatre bacs 3 dont les logements 5 respectifs ont avantageusement été équipés de manière différente les uns par rapport aux autres. Afin d'autoriser un tel assemblage, les bacs 3 comportent des raccords 80, 90 amovibles de sorte que seuls le raccord 80 du premier bac 3 placé à l'entrée du circuit de l'eau et le raccord 90 du dernier bac 3 placé à la sortie du circuit de l'eau puissent être conservés. Les bacs 3 sont réunis par des moyens d'assemblage 38, tels que des pattes de fixation emboîtables, reliant entre eux les pieds 33 de deux bacs 3 adjacents, et d'autre part des moyens d'assemblage 39, tels que des cadres et des barrettes de liaison emboîtables, reliant entre eux un orifice d'entrée de l'eau 8 d'un bac 3 avec l'orifice de sortie de l'eau 9 du bac 3 précédent. Ainsi, après avoir rempli le volume interne d'un bac 3 et traversé les cartouches de filtration et/ou de traitement de l'eau qui y sont contenues, l'eau à traiter sort par l'orifice de sortie 9 d'un bac 3 et pénètre par l'orifice d'entrée 8 d'un bac 3 adjacent. L'eau remplit progressivement ce dernier en circulant à nouveau à travers les cartouches de filtration et/ou de traitement de l'eau qui y sont contenues et s'écoule ensuite de la même manière à travers les deux autres bacs 3 que comporte l'assemblage de quatre bacs 3 illustré. Dans l'exemple représenté, les moyens d'assemblage 38, 39 se présentent sous la forme d'embouts, de pattes, de barrettes, etc., de forme appropriée clippés sur les zones d'assemblage précitées. Tout autre moyen d'assemblage peut néanmoins convenir. Les moyens d'assemblage 39 peuvent en outre comporter des moyens de calage des conduits d'arrivée d'eau propre et/ou d'arrivée d'air extérieur (non illustrés) que comportent les moyens de nettoyage et/ou les moyens d'aération des masses filtrantes contenues dans les cartouches de filtration 6, et qui circulent d'une cartouche de filtration 6 contenue dans un bac 3 vers une autre cartouche de filtration 6 contenue dans un bac 3 adjacent, en passant par leurs orifices de sortie 9 et d'entrée 8 respectifs. Les moyens de calage permettent avantageusement de maintenir lesdits conduits au-dessus du niveau de l'eau contenue dans chacun des bacs 3, de sorte qu'ils n'obstruent pas lesdits orifices d'entrée 9 et de sortie 8 et ne gênent pas le passage de l'eau contenue dans un bac 3 vers un autre bac 3 adjacent. Par conséquent, en reliant un orifice de sortie 9 avec un orifice d'entrée 8 de deux bacs 3 adjacents, les moyens d'assemblage 39 permettent avantageusement de ménager, entre les différents bacs 3, un passage à la fois pour l'eau à traiter et pour les moyens d'aération et de lavage des masses filtrantes. Ceci permet d'éviter une multiplication intempestive du nombre de conduits d'arrivée d'eau propre et/ou d'air extérieur, étant donné qu'un seul conduit d'arrivée d'eau propre et un seul conduit d'arrivée d'air extérieur peuvent traverser l'ensemble des bacs 3 que comporte le dispositif selon l'invention.

Il ressort clairement de cette description que l'invention permet d'atteindre les buts fixés, à savoir améliorer l'efficacité d'un dispositif d'assainissement de l'eau d'un bassin en multipliant ses possibilités d'adaptation en fonction de la nature de l'eau à traiter et de la qualité à atteindre. En particulier, du fait de l'interchangeabilité des cartouches de filtration 6 et/ou de traitement de l'eau 7, lesdites cartouches de traitement de l'eau 7 peuvent être disposées selon les besoins identifiés, à n'importe quelle position sur le parcours de l'eau. Ainsi, en fonction de la qualité de l'eau, une cartouche de traitement de l'eau 7 peut par exemple être disposée avant une cartouche de filtration de l'eau 6 de sorte que l'eau à traiter soit stérilisée avant de pénétrer dans les masses filtrantes. La qualité de l'eau à traiter évoluant au fil du temps, ladite cartouche de traitement de l'eau 7 peut ensuite être déplacée si nécessaire par un utilisateur pour être placée autrement sur le parcours effectué par l'eau à traiter, par exemple après une cartouche de filtration de l'eau 6, une autre cartouche de traitement de l'eau 7 ou en toute dernière position.

La présente invention n'est pas limitée aux exemples de réalisation décrits mais s'étend à toute modification et variante évidentes pour un homme du métier tout en restant dans l'étendue de la protection définie dans les revendications annexées.

## Revendications

1. Dispositif d'assainissement (1, 2) de l'eau contenue dans un bassin, ledit dispositif comportant au moins un bac (3), fermé par un couvercle (4), pourvu d'un orifice d'entrée de l'eau (8) et d'un orifice de sortie de l'eau (9), le volume interne dudit bac (3) délimitant au moins un logement (5) agencé pour accueillir des moyens de filtration de l'eau et/ou des moyens de traitement de l'eau, ledit bac (3) comportant également des moyens de récupération des particules solides issues du traitement et/ou de la filtration de l'eau, **caractérisé en ce que** ledit logement (5), lesdits moyens de filtration de l'eau et lesdits moyens de traitement de l'eau sont agencés de manière telle que ledit bac (3) puisse être équipé desdits moyens de filtration de l'eau et/ou desdits moyens de traitement de l'eau selon des dispositions interchangeables et librement choisies par l'utilisateur.

2. Dispositif d'assainissement (1, 2) selon la revendication 1, **caractérisé en ce que** ledit logement (5) comporte une structure symétrique par rapport à un plan vertical.

3. Dispositif d'assainissement (1, 2) selon l'une quelconque des revendications 1 ou 2, **caractérisé en ce que** lesdits moyens de filtration de l'eau et lesdits moyens de traitement de l'eau sont respectivement contenus dans des compartiments spécifiques agencés pour être disposés dans ledit logement (5), lesdits compartiments définissant respectivement une cartouche de filtration (6) de l'eau et une cartouche de traitement (7) de l'eau interchangeables et remplaçables, ou deux cartouches de filtration (6) de l'eau interchangeables et remplaçables, ou deux cartouches de traitement (7) de l'eau interchangeables et remplaçables.

4. Dispositif d'assainissement (1, 2) selon la revendication 3, **caractérisé en ce que** ladite cartouche de filtration (6) de l'eau comporte un panier (60), de forme sensiblement parallélépipédique, fermé par un capot (61), et dont au moins les parois (62) et le fond (63) sont ajourés, ledit panier (60) étant pourvu de moyens de sélection du sens de circulation de l'eau à travers lesdits moyens de filtration contenus dans ledit panier (60).

5. Dispositif d'assainissement (1, 2) selon la revendication 4, **caractérisé en ce que** lesdits moyens de sélection du sens de circulation de l'eau comportent au moins deux réglettes (65) pourvues d'une rangée d'ouvertures (66), chaque réglette étant montée coulissante sur une face latérale (61 a) du capot (61) pour pouvoir être déplacée entre une première position dans laquelle ladite rangée d'ouvertures (66) coïncide avec une rangée d'orifices (67) répartis sur ladite face latérale (61a) dudit capot (61), pour permettre le passage de l'eau à travers lesdits orifices (67), et une seconde position dans laquelle ladite rangée d'ouvertures (66) est décalée par rapport à ladite rangée d'orifices (67) pour interdire le passage de l'eau à travers lesdits orifices (67).

6. Dispositif d'assainissement (1, 2) selon l'une quelconque des revendications 2 à 5, **caractérisé en ce que** ladite cartouche de filtration (6) de l'eau comporte des moyens de nettoyage desdits moyens de filtration de l'eau.

7. Dispositif d'assainissement (1, 2) selon la revendication 6, **caractérisé en ce que** lesdits moyens de nettoyage comportent un tube perforé (68) s'étendant à l'intérieur dudit panier (60) et pourvu d'un raccord (69) agencé pour être raccordé à une arrivée d'eau propre.

8. Dispositif d'assainissement (1, 2) selon la revendication 7, **caractérisé en ce que** le tube perforé comporte une section de taille variable choisie en fonction du volume des moyens de filtration de l'eau à nettoyer.

9. Dispositif d'assainissement (1, 2) selon l'une quelconque des revendications 2 à 8, **caractérisé en ce que** ladite cartouche de filtration (6) de l'eau comporte des moyens d'aération desdits moyens de filtration de l'eau.

10. Dispositif d'assainissement (1, 2) selon la revendication 9, **caractérisé en ce que** lesdits moyens d'aération comportent un tuyau s'étendant à l'intérieur dudit panier (60) et pourvu d'un raccord (74) agencé pour être raccordé à une arrivée d'air extérieur.

11. Dispositif d'assainissement (1, 2) selon la revendication 3, **caractérisé en ce que** ladite cartouche de traitement (7) de l'eau comporte un caisson (70), de forme et de taille sensiblement identiques à celles de ladite cartouche de filtration (6) de l'eau, à l'intérieur duquel s'étend au moins une lampe à rayonnements ultraviolets (10), ledit caisson (70) comportant au moins un fond ajouré (71) pour l'entrée de l'eau et une ouverture (72) pour la sortie de l'eau située à proximité de l'extrémité supérieure (70a) d'une de ses faces latérales (73).

12. Dispositif d'assainissement (1, 2) selon la revendication 11, **caractérisé en ce que** ledit caisson (70) comporte un déflecteur 11' situé à proximité du fond ajouré (71) dans le prolongement d'une de ses faces latérales (73), et agencé pour forcer le flux d'eau traversant ledit bac (3) en direction du fond ajouré (71).

13. Dispositif d'assainissement (1, 2) selon l'une quelconque des revendications précédentes, **caractérisé en ce que** le fond (30) dudit bac (3) est incliné par rapport à un plan horizontal et comporte une cuvette de décantation (31) des particules solides en communication avec ledit logement (5).

14. Dispositif d'assainissement (1, 2) selon la revendication 13, **caractérisé en ce que** ledit logement (5) et ladite cuvette de décantation (31) sont séparés par une paroi (34) agencée pour autoriser le passage de l'eau dudit logement (5) vers ladite cuvette de décantation (31) et interdire le passage de l'eau de ladite cuvette de décantation (31) vers ledit logement (5).

15. Dispositif d'assainissement (1, 2) selon la revendication 14, **caractérisée en ce que** ladite paroi (34) comporte un moyen de blocage permettant de la maintenir dans une position dans laquelle son extrémité inférieure (34a) s'arrête au-dessus du fond (30) du bac (3) à une distance telle qu'un passage (35) est ménagé pour l'eau arrivant dudit logement (5).

16. Dispositif d'assainissement (1, 2) selon l'une quelconque des revendications 13 ou 14, **caractérisé en ce que** ladite cuvette de décantation (31) comporte un réceptacle amovible (36) permettant l'évacuation des particules solides sans perte d'eau dans le bassin.

17. Dispositif d'assainissement (1, 2) selon l'une quelconque des revendications précédentes, **caractérisé en ce qu'**il comporte des moyens d'assemblage d'une pluralité de bacs (3) entre eux.

18. Dispositif d'assainissement (1, 2) selon la revendication 17, **caractérisé en ce que** lesdits moyens d'assemblage sont agencés pour assembler entre eux d'une part les pieds (33) de deux bacs (3) adjacents et d'autre part l'orifice d'entrée de l'eau (8) d'un bac (3) avec l'orifice de sortie de l'eau (9) du bac (3) adjacent.

19. Cartouche (6, 7) agencée pour être disposée dans ledit logement (5) d'un bac (3) du dispositif d'assainissement (1, 2) selon l'une quelconque des revendications précédentes, **caractérisée en ce qu'**elle comporte au moins un compartiment agencé pour contenir lesdits moyens de filtration de l'eau ou lesdits moyens de traitement de l'eau.

20. Cartouche (6) selon la revendication 19, **caractérisée en ce que** ledit compartiment comporte un panier (60), de forme sensiblement parallélépipédique, fermé par un capot (61), et dont au moins les parois (62) et le fond (63) sont ajourés, ledit panier (60) étant pourvu de moyens de sélection du sens de circulation de l'eau à travers lesdits moyens de filtration contenus dans ledit panier (60).

21. Cartouche (6) selon la revendication 20, **caractérisée en ce que** lesdits moyens de sélection du sens de circulation de l'eau comportent au moins deux réglettes (65) pourvues d'une rangée d'ouvertures (66), chaque réglette étant montée coulissante sur une face latérale (61a) du capot (61) pour pouvoir être déplacée entre une première position dans laquelle ladite rangée d'ouvertures (66) coïncide avec une rangée d'orifices (67) répartis sur ladite face latérale (61a) dudit capot (61), pour permettre le passage de l'eau à travers lesdits orifices (67), et une seconde position dans laquelle ladite rangée d'ouvertures (66) est décalée par rapport à ladite rangée d'orifices (67) pour interdire le passage de l'eau à travers lesdits orifices (67).

22. Cartouche (6) selon l'une quelconque des revendications 20 ou 21, **caractérisée en ce qu'**elle comporte des moyens de nettoyage desdits moyens de filtration de l'eau.

23. Cartouche (6) selon la revendication 22, **caractérisée en ce que** lesdits moyens de nettoyage comportent un tube perforé (68) s'étendant à l'intérieur dudit panier (60) et pourvu d'un raccord (69) agencé pour être raccordé à une arrivée d'eau propre.

24. Cartouche (6) selon la revendication 22, **caractérisée en ce que** le tube perforé comporte une section de taille variable choisie en fonction du volume du panier (60) et des moyens de filtration de l'eau à nettoyer.

25. Cartouche (7) selon la revendication 19, **caractérisée en ce que** ledit compartiment comporte un caisson (70) à l'intérieur duquel s'étend au moins une lampe à rayonnements ultraviolets (10), ledit caisson (70) comportant au moins un fond (71) ajouré pour l'entrée de l'eau et une ouverture (72) pour la sortie de l'eau située à proximité de l'extrémité supérieure (70a) d'une de ses faces latérales (73).

26. Cartouche (7) selon la revendication 25, **caractérisée en ce que** ledit caisson (70) comporte un déflecteur 11' situé à proximité du fond ajouré (71) dans le prolongement d'une de ses face latérales (73) et agencé pour forcer le flux d'eau traversant ledit bac (3) en direction du fond ajouré (71).
